# EUROPEAN PATENT SPECIFICATION

(11) **EP 1 683 367 B1**
(45) Date of publication and mention of the grant of the patent: **11.04.2007**
(21) Application number: 04775019.5
(22) Date of filing: 15.10.2004
(51) Int. Cl.: H04N 13/00

(54) **MULTI-PLANE DISPLAY FOR DISPLAYING OVERLAPPING IMAGES**
MEHREBENEN-DISPLAY ZUM ANZEIGEN SICH ÜBERLAPPENDER BILDER
DISPOSITIF D'AFFICHAGE MULTI-PLANS POUR L'AFFICHAGE D'IMAGES SE CHEVAUCHANT

(30) Priority: 17.10.2003 EP 03078288
(43) Date of publication of application: 26.07.2006
(73) Proprietor: Nederlandse Organisatie voor Toegepast-Natuurwetenschappelijk Onderzoek TNO, 2628 VK Delft (NL)
(72) Inventor: KOOI, Frank, Leonard, NL-3994 XE Houten (NL); HOGERVORST, Maarten, Andreas, NL-3581 MV Utrecht (NL); KRIEKAARD, Jacob, Jan, NL-3766 HS Soest (NL)
(74) Representative: van Loon, C.J.J.
(86) International application number: PCT/NL2004/000725
(87) International publication number: WO 2005/036889

(56) References cited:
- EP-A- 0 959 377
- US-A1- 2002 126 396

## Description

### Field of the invention

The invention relates to a multi-plane display for the display of images. The invention further relates to a method of displaying images on a multi-plane display.

### Background

Multi-plane displays are presently known in the art. Usually they comprise a light source, which can be planar, and a plurality of interspaced, overlapping, translucent image screens, which can be simultaneously controlled to display images that have a spatial or three-dimensional character.

An example of a multi-plane display is described in the patent publication WO-A-0115127.

Such displays can be used for various purposes like for amusement, games, but also for showing complex information like in military applications, where it is desirable to show overlapping graphical information in one three dimensional view.

Usually the plurality of image screens comprises liquid crystal displays (LCD's). These LCD's can be black-and-white or colour displays.

The plurality of image screens can be viewed using a light source, whereby the image screens are placed between the light source and the viewer. The light source can be planar such as a LCD backlighting device, placed in parallel close to the image screens, but the light source can also be the daylight or a daylight lit background placed in the line of sight and viewable through the image screens.

When displaying colours on a multi-plane display each image screen may present a plurality of images. A first image, having a first appearance on a first image screen, may be occluded by a second image having a second appearance on a second image screen. An appearance may be a colour or a grey tone. An appearance may have a brightness ranging from transparent to full saturation, so for example in case of the colour red from transparent to fully saturated red, or in the case of grey tones from transparent to black, where black means that the light source is fully occluded by the image screen. An appearance may also include a pattern and the pattern may represent a texture.

The resulting image, when viewed from a viewpoint mainly perpendicular with respect to the front plane of the display, then shows, where the first and second image overlap, an appearance which corresponds to the mixed appearance of the first and second appearance.

In colour, the mixed appearance arises from the absorption or subtraction of colour components of the first image by the colour of the second image. In grey tone, the appearance of the overlapping image parts is darker.

In pattern, the overlapping parts appear to have a mixed pattern.

While displaying images on different planes or image screen in this way the appearances of overlapping image parts thus interfere because of the interaction of the translucent screens. For example, it is not possible to display a white image on top of a black image.

### Summary of the invention

It is an object of the present invention to provide a multi-layer display capable of simultaneously displaying images on at least two image screens that may overlap from a viewing position and that retain their appearance regardless the overlap of the images.

The object is achieved according to the invention by means of a multi-layer display that comprises a light source, a first translucent image screen , whereby the first image screen overlaps and is placed substantially parallel with the light source, arranged for displaying a first image, having a first appearance, e.g. at least one of a colour, grey tone and a pattern, and wherein the first screen is capable of displaying the first image in one of a transparent state, a normal appearance state and an occluded state, the display further comprising a second translucent image screen , whereby the second image screen can be placed spatially separated along a viewing axis perpendicular to the light source and placed substantially parallel to and overlapping with the first image screen, arranged for displaying a second image, having a second appearance, e.g. at least one of a colour, grey tone and a pattern, wherein the second screen is capable of displaying the second image in one of a transparent state, a normal appearance state and an occluded state, and wherein the first image screen is controllable to alternate at least part of the first image between transparent state and a normal appearance state and the second image screen is controllable to synchronously with the first image screen alternate at least part of the second image between an occluded state and a normal appearance state, and wherein the normal appearance state of the first image occurs simultaneously with the occluded state of the second image and the transparent state of the first image occurs simultaneously with the normal appearance state of the second image.

According to this embodiment according the invention, displayed images on the first and second image screen that overlap from a viewing point, which is usually more or less along an axis perpendicular to the light source, retain their correct appearance. Images appear as opaque. No undesired interference occurs. So even a white image can appear correctly on top of a black image.

The alternation of images or part of the image screens has to be fast, preferably at rates from 20 Hz or more in order to minimize the perceived flicker by a viewer. The phenomenon of flicker is well known form for example television sets or data monitor using cathode ray tubes.

A first embodiment according to the invention, wherein the first image screen can be controllable to occlude at least part of the first image screen not belonging to the first image, while displaying the first image in the normal appearance state, has the advantage that the background of the images when viewed together appears darker. In this way a trade-off is achieved between image brightness and appearance preservation of the overlapping images.

A second and preferred embodiment according to the invention, wherein the second image screen can be controllable to occlude at least part of the second image screen not belonging to the second image, while displaying the second image in the normal appearance state, also has the advantage that the background of the images when viewed together appears darker. In this embodiment the best perceived result is obtained. The luminance ratios between first and second images and images and background are best preserved, since all features visible through the combined image screen are mixed with occluded or "black".

The first and second embodiment combined give when viewed together an occluded or black appearing background, whereas the first and second image appear overlapping with their appearance preserved. The colour saturation of overlapping images is preserved optimally, and also there is less flicker, because the background remains occluded.

In yet a further embodiment according to the invention, wherein the first and second image screen are arranged to synchronously alternate only the overlapping part of the first and second images, as viewable along the viewing axis perpendicular to the light source, the area that needs alternation is minimised thereby substantially reducing flicker of the image screens.

In yet a further embodiment according to the invention, further comprising an at least one intermediate image screen, placed between the first and the second image screens, wherein the at least one intermediate image screen is controllable for displaying a third image , which overlaps at least in part with the first image on the first image screen , and which is overlapped by at least in part by the image on the second image screen, it is possible to display even more complex image combinations in more than two layers or image screens.

In yet a further embodiment according to the invention, wherein the third image is displayable in an occluded state simultaneously with the first image in a normal appearance state and the second image in an occluded state, and wherein the third image is displayable in a normal appearance state simultaneously with the first image in a transparent state and the second image in an occluded state, and wherein the third image is displayable in a transparent state simultaneously with the first image in a transparent state and the second image in a normal appearance state and wherein the simultaneous states of the first second and third images are alterable synchronously, it is possible to display more than two overlapping images retaining their appearance.

The object is also achieved according to the invention by means of a method for displaying coloured images on a multi-layer display as claimed in claim 7.

According to this embodiment according the invention, displayed images on the first and second image screen that overlap from a viewing point, which is usually more or less along an axis perpendicular to the light source, retain their correct appearance. Images appear as opaque. No undesired interference occurs. So even a white image can appear correctly on top of a black image.

In an third embodiment according to the invention, further comprising occluding at least part of the first image screen not belonging to the first image, when the first image is displayed in the normal appearance state. In this way a trade-off is achieved between image brightness and appearance preservation of the overlapping images.

In an fourth embodiment according to the invention, further comprising
occluding at least part of the second image screen not belonging to the second image, when the second image is displayed in the normal appearance state, also has the advantage that the background of the images when viewed together appears darker.

The third and fourth embodiment combined give when viewed together an occluded or black appearing background, whereas the first and second image appear overlapping with their appearance preserved. The colour saturation of overlapping images is preserved optimally.

In a further embodiment according to the invention, further comprising
synchronously alternating in the first and second image screen only the overlapping part of the first and second images, as viewable from the viewpoint, the area that needs alternation is minimised thereby substantially reducing flicker of the image screens.

In a further embodiment according to the invention, further comprising
displaying a third image on an at least one intermediate image screen placed between the first and the second image screens , whereby the third image overlaps at least in part with the first image on the first image screen, and which is overlapped by at least in part by the image on the second image screen, it is possible to display even more complex image combinations in more than two layers or image screens..

In a further embodiment according to the invention, further comprising displaying the third image in an occluded state simultaneously with the first image in a normal appearance state and the second image in an occluded state,
displaying the third image in a normal appearance state simultaneously with the first image in a transparent state and the second image in an occluded state,
displaying the third image in a transparent state simultaneously with the first image in a transparent state and the second image in a normal appearance state and wherein the simultaneous states of the first, second and third images are alterable synchronously, it is possible to display more than two overlapping images retaining their appearance.

### Brief description of the drawings

Fig 1 shows a basic construction of a multi-plane display according to the state of the art.
Fig 2 shows a basic architecture for controlling a multi-plane display according to the state of the art.
Figs 3a - 3c show the display of two images on two image screens according to the state of the art.
Figs 4a - 4e show the display of two images on two image screens according to the invention.
Figs 5a - 5e show the display of two images on two image screens according to the preferred embodiment of the invention.
Figs 6a - 6e show the display of two images on two image screens according to another embodiment of the invention.
Figs 7a - 7j show the display of three images on three image screens according to another embodiment of the invention.

In all drawings, an appearance, colour or grey tone, is for technical reasons represented by a pattern. The embodiments given should be read with an appearance in mind and not the pattern in the drawing.

### Detailed description

The invention can be embodied in any multi-plane colour display known in the art, where each plane comprises a image screen which can be a liquid crystal display. However the invention applies to any type of multi-plane display whereby each image screen is transparent.

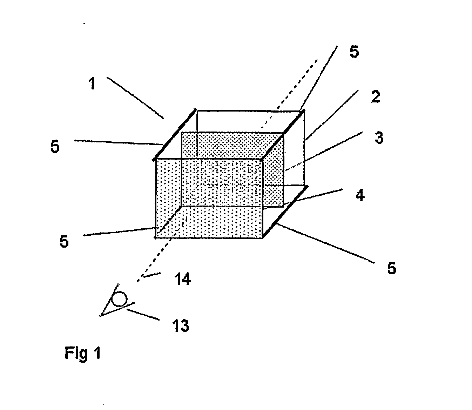

Fig 1 shows a basic construction of a multi-plane display 1 according to the state of the art.

A light source 2 may constructively be part of the display 1, but this is not necessarily the case. The light source 2 may also be a light emitting or light reflecting surface remote from the display 1.

The display 1 further comprises at least a first 3 and a second image screen 4, placed more or less parallel and overlapping from a viewer's position 13. The relative positions of the image screens 3,4 are between the viewer's position 13 and the light source 2. The image screens 3, 4 are placed substantially perpendicular to the viewing axis 14 between the viewing point 13 and the light source 2.

The image screens 3, 4 are transparent and fit for displaying images having an appearance in at least one of colour and grey tone. Furthermore the image screens 3,4 can in whole or in part be occluded, which means that viewed from a viewers position towards the light source 2, the occluded part of either of the image screens 3,4 appears as black. Such image screens 3, 4 can be liquid crystal displays (LCD's), but other technologies can be possible.

The image screens 3, 4 can be constructively integrated into a display by means of supporting means 5. The supporting means 5 may comprise supports, props, frames etc.. The relative distance between the image screens may vary depending on the image screen diameters and is not essential for the invention. Essential is that images can be viewed as overlapping.

Additional image screens may be mounted to the image screens 3, 4 using additional supporting means 5.

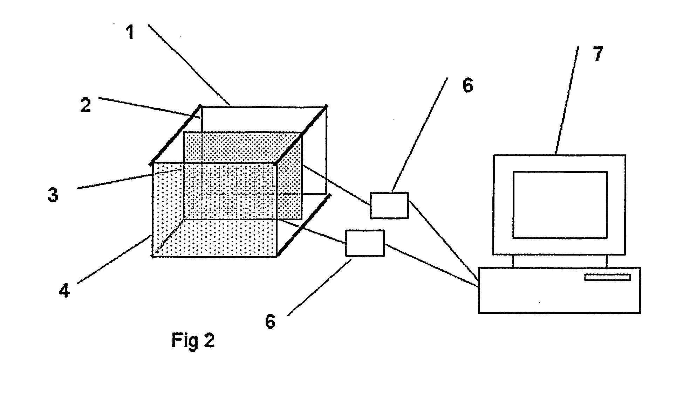

Fig 2 shows a basic architecture for controlling a multi-plane display.

Each image screen 3,4 is electronically controllable, by means of a control device 6, connected to and cooperating with each image screen respectively. Control devices 6 may be shared between image screens 3, 4. The control devices 6 can be connected to an image generator 7. This image generator 7 may be a computer or PC arranged for generating images. A computer has a processor, memory and a graphics adaptor, whereby the processor can be programmed to perform control of the graphics adaptor. The connection between display 1 and image generator 7 may be hard-wired or wireless. Various implementations are possible, readily available for the person skilled in the art.

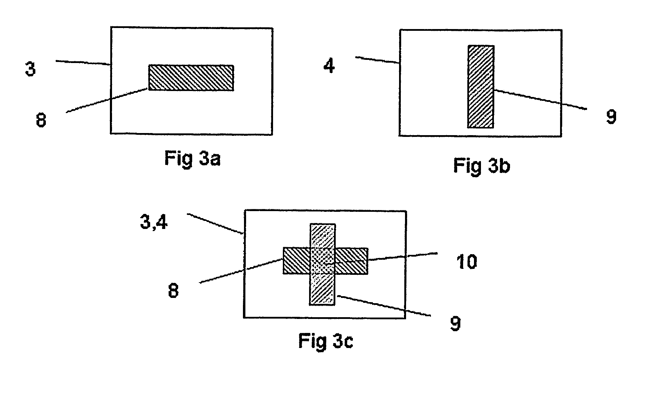

Fig 3a - 3c show the display of two images on two image screens according to the state of the art.

Fig 3a separately shows a first image 8 having a first appearance, depicted by a first pattern, displayed on the first image screen 3, fig 3b separately shows a second image 9 having a second appearance, depicted by a second pattern, displayed on the second image screen 4.

Fig 3c shows the two image screens 3 and 4 overlapping, viewed from the viewer's position 13, whereby the images 8 and 9 also overlap. The image 9 appears as being on top of image 8, but the appearances of the image 8 in the overlapping part 10 is interfered by the appearance of image 9, since both image screens 3 and 4 are transparent.

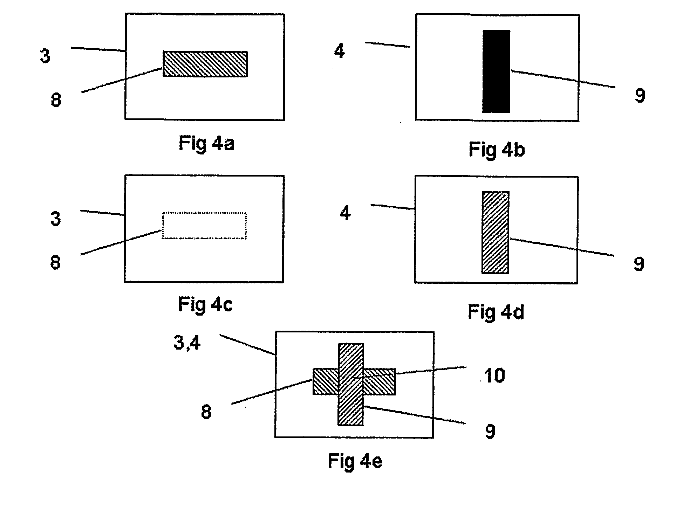

Figs 4a - 4e show the display of two images on two image screens according to the invention.

Fig 4a shows the first image 8 having a first appearance, in a normal appearance state depicted by the first pattern, displayed on the first image screen 3.

Fig 4b shows the second image 9 having a second appearance, but in an occluded state, displayed on the second image screen 4.

Fig 4c shows the first image 8 having a first appearance, but in a transparent state, displayed on the first image screen 3,

Fig 4d shows the second image 9 having the second appearance, in a normal appearance state depicted by the second pattern, displayed on the second image screen 4.

The screens 3 and 4 are controlled such that the states of the images 8 and 9 as shown in fig 4a and 4b occur simultaneously in a first timeframe.

The screens 3 and 4 are further controlled such that the states of the images 8 and 9 as shown in fig 4c and 4d occur simultaneously in a second timeframe.

The timeframes with the states of the images 8 and 9 in fig 4a and fig 4b are synchronously alternated with the timeframes with the states of the images 8 and 9 in fig 4c and fig 4d.

Fig 4e shows the two image screens 3 and 4 overlapping, viewed from the viewers position 13, whereby the images 8 and 9 partially overlap, the image 9 is viewed as being on top of image 8, and the appearances of the two images in the overlapping part 10 no interfere.

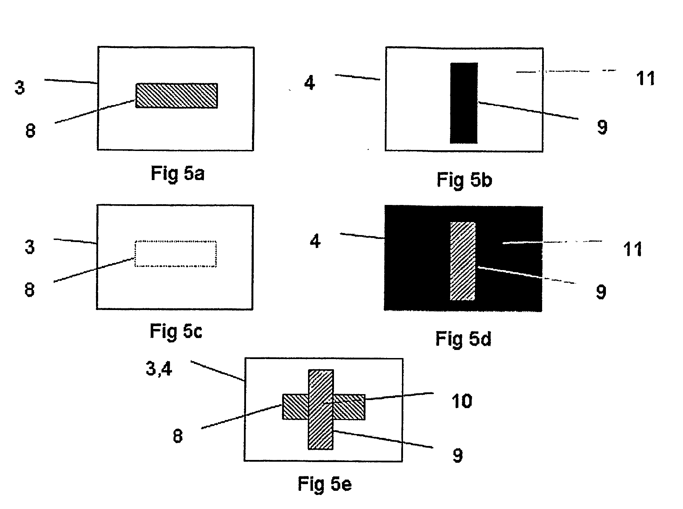

Figs 5a - 5e show the display of two images on two image screens according to the preferred embodiment according to the invention.

Fig 5a shows the first image 8 having a first appearance, in normal appearance state depicted by the first pattern, displayed on the first image screen 3.

Fig 5b shows the second image 9 having a second appearance, but in an occluded state, displayed on the second image screen 4.

Fig 5c shows the first image 8 having a first appearance, but in a transparent state, displayed on the first image screen 3.

Fig 5d shows the second image 9 having the second appearance, in normal appearance state depicted by the second pattern, with an occluded background displayed on the second image screen 4.

The screens 3 and 4 are controlled such that the states of the images 8 and 9 as shown in fig 5a and 5b occur simultaneously in the first timeframe.

The screens 3 and 4 are further controlled such that the states of the images 8 and 9 as shown in fig 5c and 5d occur simultaneously in the second timeframe.

The timeframes with the states of the images 8 and 9 in fig 5a and fig 5b are synchronously alternated with the timeframes with the states of the images 8 and 9 in fig 5c and fig 5d.

A variant, not shown here but also an embodiment according to the invention, is to occlude the background of screen 3 in the case of fig 5a having image 8 in the normal appearance state. The combined image in fig 5e would then appear as having a black or occluded background with the images 8 and 9 whereby image 9 appears on top of image 8.

The difference of this embodiment with the invention as disclosed in figs 4a - fig 4e is that the non-image part 11 of image screen 4 is alternated between transparent as shown in fig 5b and occluded as shown in fig 5d.

The result as shown in fig 5e is that 1) what is perceived as background, the non-image parts of image screens 3 and 4 combined is darker and 2) the objects appear with the proper occlusion.

In order to reduce the alternating part of the image screen 4 it is possible to alternate only part of the non-image part of image screen 4. By this reduction of the alternating part of image screen 4 a reduction of flicker can be perceived.

If part of the non-image part of image screen 4 is alternated, the non-alternating and non-image part of image screen 4 can be kept at a brightness level comparable with the brightness level of the alternating non-image part 11 of image screen 4.

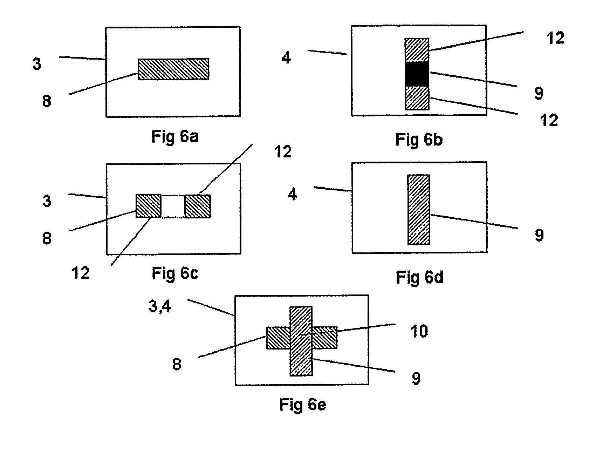

Figs 6a - 6e show the display of two images on two image screens according to another embodiment of the invention.

Fig 6a shows the first image 8 having a first appearance, in normal appearance state depicted by the first pattern, displayed on the first image screen 3.

Fig 6b shows the second image 9 having a second appearance, but the overlapping part of image 9 in an occluded state, displayed on the second image screen 4.

Fig 6c shows the first image 8 having a first appearance, but the overlapped part of image 8 in a transparent state, displayed on the first image screen 3.

Fig 6d shows the second image 9 having the second appearance, in normal appearance state depicted by the second pattern, displayed on the second image screen 4.

The screens 3 and 4 are controlled such that the states of the images 8 and 9 as shown in fig 6a and 6b occur simultaneously in the first timeframe.

The screens 3 and 4 are further controlled such that the states of the images 8 and 9 as shown in fig 6c and 6d occur simultaneously in the second timeframe.

The timeframes with the states of the images 8 and 9 in fig 5a and fig 5b are synchronously alternated with the timeframes with the states of the images 8 and 9 in fig 6c and fig 6d.

In this embodiment only the overlapping parts of images 8 and 9 are alternated, thereby minimizing the area per image screen 3, 4 to be alternated.

The non-overlapping parts 12 of the images 8, 9 can be corrected for brightness, so that a uniform brightness distribution can be perceived for each of the images 8, 9.

The invention can be used with more than two image screens.

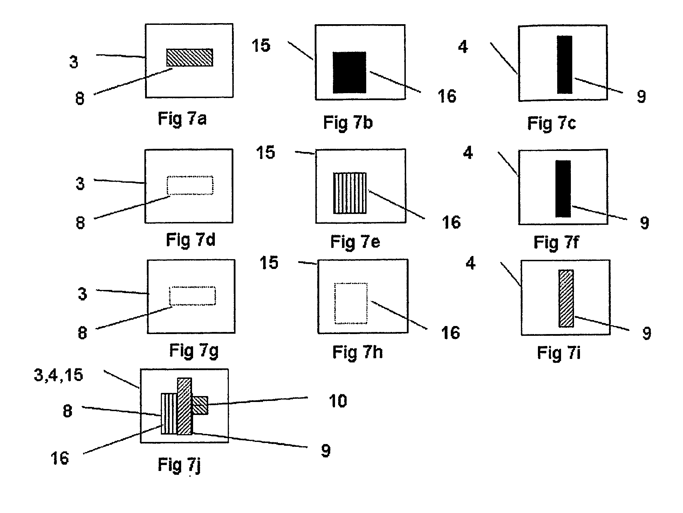

Figs 7a - 7j show the display of three images on three image screens according to another embodiment of the invention.

An intermediate image screen 15, with its own controller can be placed in between the first 3 and second 4 screen.

Fig 7a shows the first image 8 having a first appearance, in normal appearance state depicted by the first pattern, displayed on the first image screen 3.

Fig 7b shows a third image 16 having a third appearance, but in an occluded state, displayed on the intermediate image screen 15.

Fig 7c shows the second image 9 having the second appearance, but in an occluded state, displayed on the second image screen 4.

Fig 7d shows the first image 8 having a first appearance, but in a transparent state, displayed on the first image screen 3.

Fig 7e shows the third image 16 having a third appearance, in normal appearance state depicted by a third pattern, displayed on the intermediate image screen 15.

Fig 7f shows the second image 9 having the second appearance, but in an occluded state, displayed on the second image screen 4.

Fig 7g shows the first image 8 having a first appearance, but in a transparent state, displayed on the first image screen 3.

Fig 7h shows the third image 16 having a third appearance, but in a transparent state, displayed on the intermediate image screen 15.

Fig 7i shows the second image 9 having the second appearance, in normal appearance state depicted by the second pattern, displayed on the second image screen 4.

The screens 3, 4 and 15 are controlled such that the states of the images 8 , 9 and 16 as shown in fig 7a, 7b and 7c occur simultaneously in the first timeframe.

The screens 3, 4 and 15 are further controlled such that the states of the images 8 , 9 and 16 as shown in fig 7d, 7e and 7f occur simultaneously in the second timeframe.

The screens 3, 4 and 15 are further controlled such that the states of the images 8 , 9 and 16 as shown in fig 7g, 7h and 7i occur simultaneously in a third timeframe.

The timeframes with the states of the images 8 and 9 in figures 7a, 7b and 7c are synchronously alternated successively with the timeframes with the states of the images 8 and 9 in figures 7d, 7e and 7f and with the timeframes with the states of the images 8 and 9 in figures 7g, 7h and 7i.

The resulting image is shown in fig 7j, where image 9 appears on top of images 16 and 8 and where image 16 appears on top of image 8.

The order in which the image states are altered can be chosen arbitrarily.

A person skilled in the art can easily derive the general case with at least two intermediate screens 15 having intermediate overlapping images 16.

The alternating only has to take place between overlapping images.

On an intermediate screen 15 an image 16 is shown in an occluded state when a screen behind the intermediate screen is showing an image in normal appearance state.

On an intermediate screen 15 an image 16 is shown in a transparent state when a screen before the intermediate screen is showing an image in normal appearance state.

On an intermediate screen 15 an image 16 is shown in normal appearance state when no other screen before or behind the intermediate screen is showing an image in normal appearance state.

The notions 'before' and 'behind' are to be interpreted from the viewer's point of view 13.

The invention can be realised by arranging the image generator 7 to perform the alternating function required. It is also possible to arrange, in case of the use of a computer, to arrange the graphics adaptor for the alternating function. Furthermore it also possible to arrange the control devices 6 for the alternating functions according to the here above described embodiments.

By alternating images or parts thereof, the viewer may perceive the alternating images or parts thereof as flickering.

In order to counteract this phenomenon, the alternating frequency should be as high as possible. It is known in from experiments with the invention that an alternating rate of approximately 20 Hz suffices to adequately perform such that displayed overlapping images no longer interfere. At this rate however flicker is perceived strongly. At higher rates, for 2 image screens preferably at 70 Hz or higher, a common viewer perceives no flicker.

In the case that a plurality of overlapping images pairs is to be displayed, each pair can be alternated at a different timing or at a different rate. Also the alternating rates of the various couples can vary in time, for example at random.

## Claims

1. A multi-layer display (1) for displaying overlapping images comprising
• a light source (2),
• a first translucent image screen (3), whereby the first image screen (3) overlaps with and is placed substantially parallel with the light source (2), arranged for displaying a first image (8), having a first appearance, e.g. at least one of a colour, grey tone and a pattern, and wherein the first screen (3) is capable of displaying the first images (8) in one of a transparent state, a normal appearance state and an occluded state,
• a second translucent image screen (4), whereby the second image screen (4) is placed spatially separated along a viewing axis (14) perpendicular to the light source and placed substantially parallel to and overlapping with the first image screen (3), arranged for displaying a second image(9), having a second appearance, e.g. at least one of a colour, grey tone and a pattern, wherein the second screen (4) is capable of displaying the second image (9) in one of a transparent state, a normal appearance state and an occluded state,
**characterised in that**
the first image screen (3) is controllable to alternate at least part of the first image (8) between transparent state and a normal appearance state and the second image screen (4) is controllable to synchronously with the first image screen (3) alternate at least part of the second image (8) between an occluded state and a normal appearance state and wherein the normal appearance state of the first image(8) occurs simultaneously with the occluded state of the second image (9) and the transparent state of the first image (8) occurs simultaneously with the normal appearance state of the second image (9).

2. The multi-layer display (1) according to claim 1, wherein the first image screen (3) is controllable, while displaying the first image in the normal appearance state, to occlude at least part of the first image screen (3), the at least part of the first image screen (3) not belonging to the first image (8) in the normal appearance state.

3. The multi-layer display (1) according to claim 1 or 2, wherein the second image screen (4) is controllable, while displaying the second image in the normal appearance state, to occlude at least part of the second image screen (4), the at least part of the second image screen (4) not belonging to the second image (9) in the normal appearance state.

4. The multi-layer display (1) according to claim 1, wherein the first and second image screen (4) are arranged to synchronously with the first image screen (3) alternate only the overlapping part (10) of the first and second images (8, 9), as viewed from the viewpoint (13) to the light source (2).

5. The multi-layer display (1) according to any of the preceding claims, further comprising an at least one intermediate image screen (15), placed between the first and the second image screens (3, 4), wherein the at least one intermediate image screen (15) is controllable for displaying a third image (16), which overlaps at least in part with the first image (8) on the first image screen (3), and which is overlapped by at least in part by the image on the second image screen (4).

6. The multi-layer display (1) according to claim 5, wherein the third image (16) is displayable in an occluded state simultaneously with the first image (8) in a normal appearance state and the second image (8) in an occluded state, and wherein the third image (16) is displayable in a normal appearance state simultaneously with the first image (8) in a transparent state and the second image (8) in an occluded state, and wherein the third image (16) is displayable in a transparent state simultaneously with the first image (8) in a transparent state and the second image (8) in a normal appearance state and wherein the simultaneous states of the first second and third images (8, 9, 16) are alterable synchronously.

7. A method for displaying coloured images on a multi-layer display (1),
• the multi-layer display (1) having a light source (2), a first translucent image screen (3), whereby the first image screen (3) overlaps with and is placed substantially parallel with the light source (2), arranged for displaying a first image (8), having a first appearance, e.g. at least one of a colour, grey tone and a pattern, and wherein the first screen (3) is capable of displaying the first images (8) in one of a transparent state, a normal appearance state and an occluded state, and a second translucent image screen (4), whereby the second image screen (4) is placed spatially separated along a viewing axis (14) perpendicular to the light source and placed substantially parallel to and overlapping with the first image screen (3), arranged for displaying a second image(9), having a second appearance, e.g. at least one of a colour, grey tone and a pattern, wherein the second screen (4) is capable of displaying the second image (9) in one of a transparent state, a normal appearance state and an occluded state,
the method comprising
alternating at least part of the first image (8) between a transparent state and a normal appearance state and synchronously alternating at least part of the second image (8) between an occluded state and a normal appearance state and wherein the normal appearance state of the first image(8) occurs simultaneously with the occluded state of the second image (9) and the transparent state of the first image (8) occurs simultaneously with the normal appearance state of the second image (9).

8. The method according claim 7, further comprising
• occluding at least part of the first image screen (3) not belonging to the first image (8), when the first image (8) is displayed in the normal appearance state.

9. The method according claim 7 or 8, further comprising
• occluding at least part of the second image screen (4) not belonging to the second image (9), when the second image (9) is displayed in the normal appearance state.

10. The method according to claim 7, further comprising
• synchronously alternating in the first and second image screen (4) only the overlapping part of the first and second images (8, 9), as viewable from the viewpoint (13).

11. The method according to any of the preceding claims 7 - 10 , further comprising
• displaying a third image (16) on an at least one intermediate image screen (15), placed between the first and the second image screens (3, 4), whereby the third image (16) overlaps at least in part with the first image (8) on the first image screen (3), and which is overlapped by at least in part by the image (9) on the second image screen (4).

12. The method according to claim 11, further comprising
• displaying the third image (16) in an occluded state simultaneously with the first image (8) in a normal appearance state and the second image (8) in an occluded state,
• displaying the third image (16) in a normal appearance state simultaneously with the first image (8) in a transparent state and the second image (8) in an occluded state,
• displaying the third image (16) in a transparent state simultaneously with the first image (8) in a transparent state and the second image (8) in a normal appearance state and wherein the simultaneous states of the first, second and third images (8, 9, 16) are alterable synchronously.

## Patentansprüche

1. Mehrlagige Anzeige (1) zum Anzeigen überlappender Bilder mit:
Einer Lichtquelle (2),
einem ersten lichtdurchlässigen Bildschirm (3), wodurch der erste Bildschirm (3) überlappend mit und im Wesentlichen parallel zu der Lichtquelle (2) ist, wobei der Bildschirm zum Anzeigen eines ersten Bildes (8) mit einer ersten Erscheinungsform, zum Beispiel wenigstens einem von Farbton, Grauton und einem Muster, ausgestaltet ist und wobei der erste Schrim (3) dazu in der Lage ist, die ersten Bilder (8) in einen von einem transparenten Zustand,
einem normalen Erscheinungsbildzustand und einem abgeschatteten Zustand anzuzeigen,
einem zweiten lichtdurchlässigen Bildschirm (4), wodurch der zweite Bildschirm (4) räumlich getrennt entlang einer Sichtachse (14), die senkrecht zu der Lichtquelle liegt, platziert ist und im Wesentlichen parallel zu und überlappend mit dem ersten Bildschirm (3) platziert ist, wobei der zweite Bildschirm dazu ausgestaltet ist, ein zweites Bild (9) mit einer zweiten Erscheinungsform, zum Beispiel wenigstens einem von Farbton, Grauton und einem Muster, anzuzeigen, wobei der zweite Bildschirm (4) dazu in der Lage ist, das zweite Bild (9) in einem von einem transparenten Zustand, einem normalen Erscheinungsbildzustand und einem abgeschatteten Zustand anzuzeigen,
**dadurch gekennzeichnet, dass**
der erste Bildschirm (3) dazu steuerbar ist, wenigstens einen Teil des ersten Bildes (8) zwischen einem transparenten Zustand und einem normalen Erscheinungsbildzustand wechseln zu lassen, und der zweite Bildschirm (4) dazu steuerbar ist, synchron mit dem ersten Bildschirm (3) wenigstens einen Teil des zweiten Bildes (8) zwischen einem abgeschatteten Zustand und einem normalen Erscheinungsbildzustand wechseln zu lassen, und wobei der normale Erscheinungsbildzustand des ersten Bildes (8) simultan mit dem abgeschatteten Zustand des zweiten Bildes (9) auftritt und der transparente Zustand des ersten Bildes (8) simultan mit dem normalen Erscheinungsbildzustand des zweiten Bildes (9) auftritt.

2. Mehrlagige Anzeige (1) gemäß Anspruch 1, wobei der erste Bildschirm (3) dazu steuerbar ist, beim Anzeigen des ersten Bildes in dem normalen Erscheinungsbildzustand wenigstens einen Teil des ersten Bildschirms (3) abzuschatten, wobei der wenigstens eine Teil des ersten Bildschirms (3) nicht zu dem ersten Bild (8) in dem normalen Erscheinungsbildzustand gehört.

3. Mehrlagige Anzeige gemäß Anspruch 1 oder 2, wobei der zweite Bildschirm (4) dazu steuerbar ist, beim Anzeigen des zweiten Bildes in dem normalen Erscheinungsbildzustand wenigstens einen Teil des zweiten Bildschirms (4) abzuschatten, wobei der wenigstens eine Teil des zweiten Bildschirms (4) nicht zu dem zweiten Bild (9) in dem normalen Erscheinungsbildzustand gehört.

4. Mehrlagige Anzeige (1) gemäß Anspruch 1, wobei der erste und der zweite Bildschirm (4) dazu ausgestaltet sind, synchron mit dem ersten Bildschirm (3) nur den überlappenden Teil (10) der ersten und zweiten Bilder (8, 9), bei Ansicht von dem Betrachtungspunkt (13) auf die Lichtquelle, (2) wechseln zu lassen.

5. Mehrlagige Anzeige (1) gemäß einem der vorhergehenden Ansprüche, die weiter wenigstens einen dazwischenliegenden Bildschirm (15) aufweist, der zwischen den ersten und zweiten Bildschirmen (3, 4) platziert ist, wobei der wenigstens eine dazwischenliegende Bildschirm (15) dazu steuerbar ist, ein drittes Bild (16) anzuzeigen, das wenigstens teilweise mit dem ersten Bild (8) auf dem ersten Bildschirm (3) überlappt und das wenigstens teilweise von dem Bild auf dem zweiten Bildschirm (4) überlappt wird.

6. Mehrlagige Anzeige nach Anspruch 5, wobei das dritte Bild (16) in einem abgeschatteten Zustand simultan mit dem ersten Bild (8) in einem normalen Erscheinungsbildzustand und dem zweiten Bild (8) in einem abgeschatteten Zustand anzeigbar ist, und wobei das dritte Bild in einem normalen Erscheinungsbildzustand simultan mit dem ersten Bild (8) in einem transparenten Zustand und dem zweiten Bild (8) in einem abgeschatteten Zustand anzeigbar ist, und wobei das dritte Bild (16) in einem transparenten Zustand simultan mit dem ersten Bild (8) in einem transparenten Zustand und dem zweiten Bild (8) in einem normalen Erscheinungsbildzustand anzeigbar ist und wobei simultane Zustände der ersten, zweiten und dritten Bilder (8, 9, 16) synchron wechselbar sind.

7. Verfahren zum Anzeigen farbiger Bilder auf einer mehrlagigen Anzeige (1), wobei die mehrlagige Anzeige (1) eine Lichtquelle (2), einen lichtdurchlässigen Bildschirm (3) aufweist, wodurch der erste Bildschirm (3) mit der Lichtquelle (2) überlappt und im Wesentlichen parallel dazu platziert ist, wobei der Bildschirm (3) zum Anzeigen eines ersten Bildes (8) mit einem ersten Erscheinungsbild, zum Beispiel wenigstens einem von Farbton, Grauton und einem Muster, ausgestaltet ist, und wobei der erste Bildschirm (3) dazu in der Lage ist, die ersten Bilder (8) in einem transparenten Zustand, einem normalen Erscheinungsbildzustand und einem abgeschatteten Zustand anzuzeigen, und einen zweiten lichtdurchlässigen Bildschirm (4) aufweist, wodurch der zweite Bildschirm (4) räumlich getrennt entlang einer Sichtachse (14), die senkrecht zu der Lichtquelle liegt, platziert ist und im Wesentlichen parallel zu und überlappend mit dem ersten Bildschirm platziert ist, wobei der zweite Bildschirm dazu ausgestattet ist, ein zweites Bild (9) mit einem zweiten Erscheinungsbild, zum Beispiel wenigstens einem von einem Farbton, Grauton und einem Muster, anzuzeigen, wobei der zweite Bildschirm (4) dazu in der Lage ist, das zweite Bild (9) in einem von einem transparenten Zustand, einem normalen Erscheinungsbildzustand und einem abgeschatteten Zustand anzuzeigen,
wobei bei dem Verfahren
wenigstens ein Teil des ersten Bildes (8) zwischen einem transparenten Zustand und einem normalen Erscheinungsbildzustand wechseln gelassen wird und synchron wenigstens ein Teil des zweiten Bildes (8) zwischen einem abgeschatteten Zustand und einem normalen Erscheinungsbildzustand wechseln gelassen wird, und wobei der normale Erscheinungsbildzustand des ersten Bildes simultan mit dem abgeschatteten Zustand des zweiten Bildes (9) und der transparente Zustand des ersten Bildes (8) simultan mit dem normalen Erscheinungsbildzustand des zweiten Bildes (9) auftritt.

8. Verfahren gemäß Anspruch 7, bei dem weiter
wenigstens ein Teil des ersten Bildschirms (3), der nicht zu dem ersten Bild (8) gehört, abgeschattet wird, wenn das erste Bild (8) in dem normalen Erscheinungsbildzustand angezeigt wird.

9. Verfahren gemäß Anspruch 7 oder 8, bei dem weiter
wenigstens ein Teil des zweiten Bildschirms (4), der nicht zu dem zweiten Bild (9) gehört, abgeschattet wird, wenn das zweite Bild (9) in dem normalen Erscheinungsbildzustand angezeigt wird.

10. Verfahren gemäß Anspruch 7, bei dem weiter in dem ersten und zweiten Bildschirm (4) nur der überlappende Teil der ersten und zweiten Bilder (8, 9) bei Ansicht von dem Betrachtungspunkt (13) synchron wechseln gelassen wird.

11. Verfahren gemäß einem der vorhergehenden Ansprüche 7 bis 10, bei dem weiter
ein drittes Bild (16) auf wenigstens einem dazwischenliegenden Bildschirm (15) angezeigt wird, der zwischen den ersten und zweiten Bildschirmen (3, 4) platziert ist, wobei der dritte Bildschirm (16) wenigstens teilweise mit dem ersten Bild (8) auf dem ersten Bildschirm (3) überlappt, und wobei der dritte Bildschirm wenigstens teilweise von dem Bild (9) auf dem zweiten Bildschirm (4) überlappt wird.

12. Verfahren gemäß Anspruch 11, bei dem weiter
das dritte Bild (16) in einem abgeschatteten Zustand simultan mit dem ersten Bild (8) in einem normalen Erscheinungsbildzustand und dem zweiten Bild (8) in einem abgeschatteten Zustand angezeigt wird,
das dritte Bild (16) in einem normalen Erscheinungsbildzustand simultan mit dem ersten Bild (8) in einem transparenten Zustand und dem zweiten Bild (8) in einem abgeschatteten Zustand angezeigt wird,
das dritte Bild (16) in einem transparenten Zustand simultan mit dem ersten Bild (8) in einem transparenten Zustand und dem zweiten Bild (8) in eine normalen Erscheinungsbildzustand angezeigt wird, und wobei die Simultanzustände der ersten, zweiten und dritten Bilder (8, 9, 16) synchron wechselbar sind.

## Revendications

1. Affichage multicouche (1) pour afficher des images se chevauchant, comportant
• une source de lumière (2),
• un premier écran d'image translucide (3), de sorte que le premier écran d'image (3) chevauche la source de lumière (2), et est placé essentiellement parallèle à celle-ci, conçu pour afficher une première image (8), ayant une première apparence, par exemple au moins l'un parmi une couleur, une teinte de gris et un motif, et dans lequel le premier écran (3) est capable d'afficher les premières images (8) dans un état parmi un état transparent, un état d'apparence normale et un état occlus,
• un second écran d'image translucide (4), de sorte que le second écran d'image (4) est placé en étant spatialement séparé le long d'un axe de vision (14) perpendiculaire à la source de lumière et placé essentiellement parallèle au premier écran d'image (3), et chevauchant celui-ci, conçu pour afficher une deuxième image (9), ayant une seconde apparence, par exemple au moins l'un parmi une couleur, une teinte de gris et un motif, dans lequel le second écran (4) est capable d'afficher la deuxième image (9) dans un état parmi un état transparent, un état d'apparence normale et un état occlus,
**caractérisé en ce que**
le premier écran d'image (8) peut être commandé pour faire alterner au moins une partie de la première image (8) entre un état transparent et un état d'apparence normale et le second écran d'image (4) peut être commandé de manière synchronisée avec le premier écran d'image (3) pour faire alterner au moins une partie de la deuxième image (8) entre un état occlus et un état d'apparence normale et dans lequel l'état d'apparence normale de la première image (8) apparaît simultanément avec l'état occlus de la deuxième image (9) et l'état transparent de la première image (8) apparaît simultanément avec l'état d'apparence normale de la deuxième image (9).

2. Affichage multicouche (1) selon la revendication 1, dans lequel le premier écran d'image (3) peut être commandé, tout en affichant la première image dans l'état d'apparence normale, pour occlure au moins une partie du premier écran d'image (3), la au moins une partie du premier écran d'image (3) n'appartenant pas à la première image (8) dans l'état d'apparence normale.

3. Affichage multicouche (1) selon la revendication 1 ou 2, dans lequel le second écran d'image (4) peut être commandé, tout en affichant la deuxième image dans l'état d'apparence normale, pour occlure au moins une partie du second écran d'image (4), la au moins une partie du second écran d'image (4) n'appartenant pas à la deuxième image (9) dans l'état d'apparence normale.

4. Affichage multicouche (1) selon la revendication 1, dans lequel les premier et second écrans d'image (4) sont conçus pour, de manière synchronisée avec le premier écran d'image (3), faire alterner uniquement la partie chevauchante (10) des première et deuxième images (8, 9), comme observé depuis le point de vision (13) vers la source de lumière (2).

5. Affichage multicouche (1) selon l'une quelconque des revendications précédentes, comportant de plus au moins un écran d'image intermédiaire (15), placé entre les premier et second écrans d'image (3, 4), dans lequel le au moins un écran d'image intermédiaire (15) peut être commandé pour afficher une troisième image (16), qui chevauche au moins en partie la première image (8) sur le premier écran d'image (3), et qui est chevauchée au moins en partie par l'image sur le second écran d'image (4).

6. Affichage multicouche (1) selon la revendication 5, dans lequel la troisième image (16) peut être affichée dans un état occlus simultanément avec la première image (8) dans un état d'apparence normale et la deuxième image (8) dans un état occlus, et dans lequel la troisième image (16) peut être affichée dans un état d'apparence normale simultanément avec la première image (8) dans un état transparent et la deuxième image (8) dans un état occlus, et dans lequel la troisième image (16) peut être affichée dans un état transparent simultanément avec la première image (8) dans un état transparent et la deuxième image (8) dans un état d'apparence normale et dans lequel les états simultanés des première, deuxième et troisième images (8, 9, 16) peuvent être altérés de manière synchronisée.

7. Procédé pour afficher des images colorées sur un affichage multicouche (1),
• l'affichage multicouche (1) ayant une source de lumière (2), un premier écran d'image translucide (3), de sorte que le premier écran d'image (3) chevauche la source de lumière (2), et est placé essentiellement parallèle à celle-ci, conçu pour afficher une première image (8), ayant une première apparence, par exemple au moins l'un parmi une couleur, une teinte de gris et un motif, et dans lequel le premier écran (3) est capable d'afficher les premières images (8) dans un état parmi un état transparent, un état d'apparence normale et un état occlus, un second écran d'image translucide (4), de sorte que le second écran d'image (4) est placé en étant spatialement séparé le long d'un axe de vision (14) perpendiculaire à la source de lumière et placé essentiellement parallèle au premier écran d'image (3), et chevauchant celui-ci, conçu pour afficher une deuxième image (9), ayant une seconde apparence, par exemple au moins l'un parmi une couleur, une teinte de gris et un motif, dans lequel le second écran (4) est capable d'afficher la deuxième image (9) dans un état parmi un état transparent, un état d'apparence normale et un état occlus,
le procédé comportant
l'alternance d'au moins une partie de la première image (8) entre un état transparent et un état d'apparence normale et le second écran d'image (4) peut être commandé de manière synchronisée avec le premier écran d'image (3) pour faire alterner au moins une partie de la deuxième image (8) entre un état occlus et un état d'apparence normale et dans lequel l'état d'apparence normale de la première image (8) apparaît simultanément avec l'état occlus de la deuxième image (9) et l'état transparent de la première image (8) apparaît simultanément avec l'état d'apparence normale de la deuxième image (9).

8. Procédé selon la revendication 7, comportant de plus
• l'occlusion d'au moins une partie du premier écran d'image (3) n'appartenant pas à la première image (8), lorsque la première image (8) est affichée dans l'état d'apparence normale.

9. Procédé selon la revendication 7 ou 8, comportant de plus
• l'occlusion d'au moins une partie du second écran d'image (4) n'appartenant pas à la deuxième image (9), lorsque la deuxième image (9) est affichée dans l'état d'apparence normale.

10. Procédé selon la revendication 7, comportant de plus
• l'alternance synchronisée dans les premier et second écrans d'image (4) uniquement de la partie chevauchante des première et deuxième images (8, 9), comme pouvant être observé depuis le point de vision (13).

11. Procédé selon l'une quelconque des revendications 7 à 10, comportant de plus
• l'affichage d'une troisième image (16) sur au moins un écran d'image intermédiaire (15), placé entre les premier et second écrans d'image (3, 4), de sorte que la troisième image (16) chevauche au moins en partie la première image (8) sur le premier écran d'image (3), et qui est chevauchée au moins en partie par l'image (9) sur le second écran d'image (4).

12. Procédé selon la revendication 11, comportant de plus
• l'affichage de la troisième image (16) dans un état occlus simultanément avec la première image (8) dans un état d'apparence normale et la deuxième image (8) dans un état occlus,
• l'affichage de la troisième image (16) dans un état d'apparence normale simultanément avec la première image (8) dans un état transparent et la deuxième image (8) dans un état occlus,
• l'affichage de la troisième image (16) dans un état transparent simultanément avec la première image (8) dans un état transparent et la deuxième image (8) dans un état d'apparence normale, et dans lequel les états simultanés des première, deuxième et troisième images (8, 9, 16) peuvent être altérés de manière synchronisée.
